# DEMANDE DE BREVET EUROPEEN

(11) **EP 0 886 159 A1**
(43) Date de publication de la demande: **23.12.1998**
(21) Numéro de dépôt: 98401451.4
(22) Date de dépôt: 15.06.1998
(51) Int. Cl.: G02B 6/44

(54) **Câble à fibres optiques**

(30) Priorité: 16.06.1997 FR 9707425
(71) Demandeur: ALCATEL ALSTHOM COMPAGNIE GENERALE D'ELECTRICITE, 75008 Paris (FR)
(72) Inventeur: McNutt, Christopher, Hickory, NC 28602 (US); Yang, Michael, NE Conover, NC 28613 (US); Bonicel, Jean-Pierre, 92500 Rueil Malmaison (FR); Gaillard, Pierre, NE Hickory, NC 28601 (US); Tatat, Oliver, NE Hickory, NC 28061 (US)
(74) Mandataire: Feray, Valérie

(57) **Abrégé**

La présente invention porte sur un câble à fibres optiques constitué d'un tube unique (1) qui délimite une âme intérieure (3) logeant au moins une fibre optique (5) et dont la paroi incorpore une zone de renforcement (7).

La zone de renforcement (7) est constituée d'un matériau thermoplastique conférant au câble à la fois résistance à la compression et à l'impact et flexibilité.

## Description

L'invention concerne un câble à fibres optiques constitué d'un tube unique qui délimite une âme intérieure logeant au moins une fibre optique, et dont la paroi incorpore une zone de renforcement.

Une telle structure de câble est particulièrement avantageuse, car elle permet d'éviter l'utilisation, connue dans les câbles de structure classique, d'une zone de renforcement entourant le tube ainsi que celle d'une gaine extérieure de protection entourant ou incorporant cette zone de renforcement, de sorte que, pour une capacité de fibres donnée, le câble obtenu a un diamètre plus faible et est plus léger que les câbles de structure classique.

En outre, une cette structure permet d'accéder plus facilement aux fibres optiques ou rubans de fibres optiques logés dans le tube, afin notamment d'effectuer des raccordements.

Le but de l'invention est de fournir un câble à fibres optiques constitué d'un tube unique qui délimite une âme intérieure logeant au moins une fibre optique, avec une zone de renforcement constituée d'un matériau qui confère à ce câble à la fois résistance à la compression et à l'impact et flexibilité et qui soit simple à mettre en place lors de la fabrication du câble.

A cet effet, l'invention a pour objet un câble à fibres optiques constitué d'un tube unique qui délimite une âme intérieure logeant au moins une fibre optique et dont la paroi incorpore une zone de renforcement,
**caractérisé en ce que** la zone de renforcement est constituée d'un matériau thermoplastique conférant au câble à la fois résistance à la compression et à l'impact et flexibilité.
Le matériau thermoplastique réalise un compromis entre la résistance à la compression et à l'impact et la flexibilité du câble. De plus, la mise en place du matériau de la zone de renforcement s'effectue par chauffage puis refroidissement pour ramollir ou durcir le matériau déjà polymérisé.

Avantageusement, le tube est constitué d'un matériau thermoplastique de même que la zone de renforcement. Le câble selon l'invention est fabriqué en une seule étape par exemple de co-extrusion qui apporte une simplification de fabrication, ainsi qu'une augmentation de vitesse en ligne et une diminution de coût de production.

D'autres caractéristiques et avantages de l'invention apparaîtront à la lecture de la description de deux modes de réalisation de l'invention illustrés par les dessins.
- La figure 1 montre en coupe transversale un premier mode de réalisation d'un câble selon l'invention avec une zone de renforcement continue annulaire.
- La figure 2 montre en coupe transversale une première variante d'un deuxième mode de réalisation d'un câble selon l'invention, avec une zone de renforcement en deux secteurs de forme semi-cylindrique sensiblement annulaire.
- La figure 3 montre en coupe transversale une deuxième variante du deuxième mode de réalisation d'un câble selon l'invention, avec une zone de renforcement en deux secteurs de forme semi-cylindrique sensiblement elliptique.
- La figure 4 montre en coupe transversale une troisième variante du deuxième mode de réalisation d'un câble selon l'invention, avec une zone de renforcement en deux secteurs de forme semi-cylindrique sensiblement en croissant de lune.

Un câble selon l'invention est utilisé notamment dans le domaine des télécommunications. Il est constitué d'un tube unique qui délimite une âme intérieure logeant au moins une fibre optique. Le tube et l'âme intérieure ont des diamètres typiques respectifs de 12,5-13 mm et 4,6-4,7 mm.

Le tube est constitué par exemple de polyéthylène de faible, moyenne ou haute densité (LDPE, LLDPE, MDPE ou HDPE), et plus généralement d'un matériau thermoplastique. De préférence, ce matériau possède un module de flexion supérieur à 850 MPa.

Le polyéthylène ou un autre matériau thermoplastique choisi pour constituer le tube est chargé par exemple en noir de carbone pulvérulent pour conférer au câble une résistance à la chaleur et au vieillissement accrue. D'autres additifs tels des antioxydants peuvent également être ajoutés.

L'âme intérieure est délimitée par la paroi du tube et contient de préférence un matériau de remplissage par exemple un gel assurant une protection des fibres optiques qui y sont logées.

Le câble selon l'invention comprend également une zone de renforcement continue ou discontinue, disposée autour l'âme intérieure du tube dans la paroi de ce dernier. La zone de renforcement est constituée par exemple d'un polyamide (PA) ou d'un polybutylène téréphtalate (PBT), et plus généralement d'un matériau thermoplastique. De préférence, ce matériau possède un module de flexion supérieur à 1000 MPa.

De préférence, le matériau constitutif de la zone de renforcement est chargé par exemple de fibres de verre dans une proportion qui ne dépasse pas 40% en masse. D'autre charges conviennent également et par exemple des billes de verre ou encore du talc ou du mica, du carbonate de calcium ou une combinaison de ces éléments.

De même, pour conférer au câble une résistance en traction accrue, des éléments de renfort sont disposés parallèlement à une génératrice du câble. Des fils d'aramides ou de polyester, des fibres de verre unitaires ou tressées constituent des exemples de tels éléments de renfort.

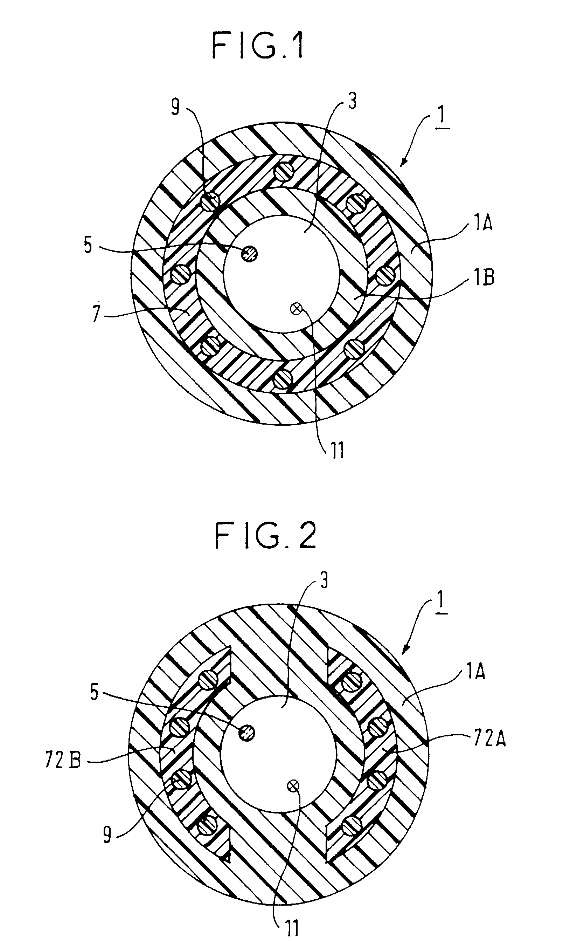

Selon un premier mode particulier de réalisation de l'invention, le câble est constitué, figure 1, d'un tube unique 1 délimitant une âme intérieure 3 logeant au moins une fibre optique 5 et dont la paroi incorpore autour de l'âme intérieure 3 une zone de renforcement 7 qui présente dans un plan de coupe transversal une section continue annulaire. Des éléments de renfort 9 sont disposés et régulièrement espacés dans la zone de renforcement 7.

De préférence, la zone de renforcement 7 possède une orientation hélicoïdale dans une direction parallèle à une génératrice 11 du tube 1 pour conférer au câble un résistance et une flexibilité accrues.

Dans l'exemple de la figure 1, la zone de renforcement continue annulaire 7 est incorporée dans la paroi du tube 1, de sorte que cette dernière comprend deux couches 1A et 1B du même matériau constitutif du tube 1 séparées par la zone de renforcement 7 ; il est également possible de former ces deux couches 1A et 1B à partir de deux matériaux différents.

Selon un deuxième mode particulier de réalisation de l'invention, dont trois variantes sont illustrées respectivement aux figures 2, 3 et 4, un câble selon l'invention comprend une zone de renforcement qui présente dans un plan de coupe transversal au moins deux secteurs disjoints disposés de part et d'autre de l'âme intérieure du tube, de préférence de façon symétrique par rapport à l'âme.

La zone renforcement constituée de deux secteurs disjoints apporte plusieurs avantages.

D'une part, le compromis entre la résistance à la compression et à l'impact et la flexibilité du câble est optimisé, compte tenu d'autres contraintes à satisfaire telles une flexion à basse et à haute température, une flexion cyclique, ou encore une torsion du câble.

D'autre part, l'accès aux fibres optiques logées dans l'âme intérieure du câble est direct à travers le tube entre les deux secteurs disjoints de la zone de renforcement. Dans ce deuxième mode de réalisation, le raccordement du câble à un plusieurs câbles dérivés par piquage en ligne ("mid-span access") est particulièrement aisé. De plus , l'ouverture du câble ne requiert pas d'outils spéciaux qui auraient pour conséquence d'augmenter le coût d'installation. Une simple lame est suffisante pour l'ouverture du câble, les secteurs disjoints disposés de part et d'autre de l'âme intérieure servant de guide à la progression de l'outil de découpe et protégeant ainsi les fibres contre un risque d'endommagement.

Selon une première variante, figure 2, le câble est constitué d'un tube unique 1 délimitant une âme intérieure 3 logeant au moins une fibre optique 5 dont la paroi incorpore une zone de renforcement formée de deux secteurs disjoints 72A et 72B ayant chacun dans un plan de coupe transversal une forme semi-cylindrique sensiblement annulaire. Des éléments de renfort 9 sont disposés régulièrement espacés dans les deux secteurs 72A et 72B.

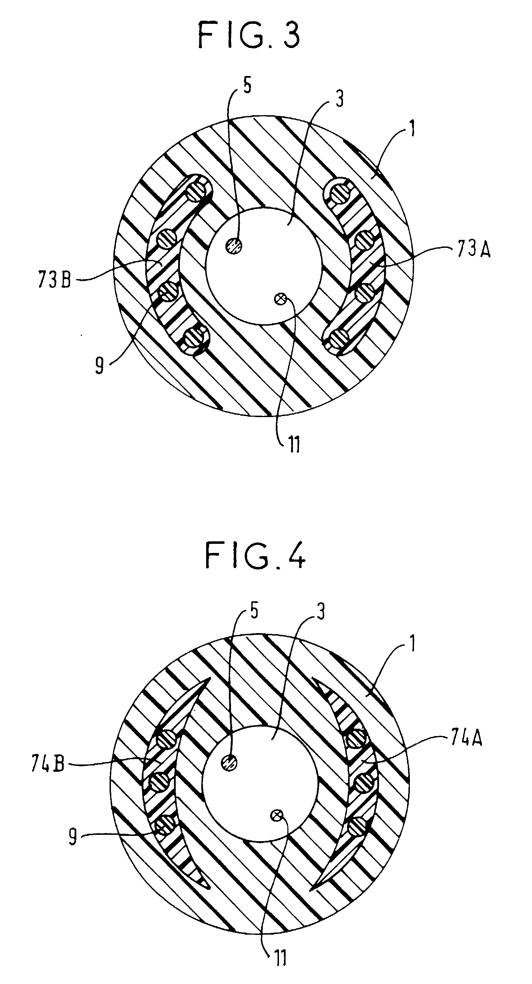

Les figures 3 et 4 illustrent deux autres variantes de réalisation d'une zone de renforcement du câble en deux secteurs disjoints. En particulier, figure 3, chaque secteur présente dans un plan de coupe transversal une forme semi-cylindrique sensiblement elliptique, et figure 4, une forme semi-cylindrique sensiblement en croissant de lune.

Le câble selon l'invention est fabriqué par exemple par co-extrusion du tube et de la zone de renforcement. Des têtes d'extrudeuse de géométrie différente permettent d'obtenir une zone de renforcement continue annulaire ou en deux secteurs comme décrit précédemment. Des éléments de renfort sont introduits simultanément au niveau de la tête d'extrudeuse choisie en fonction de la zone de renforcement désirée, et qui est mise en rotation autour d'un axe parallèle à une génératrice du câble extrudé pour orienter en hélice la zone de renforcement continue annulaire dans la direction de la génératrice du câble.

Le câble selon l'invention est ainsi fabriqué en une seule étape, qui permet d'augmenter la vitesse en ligne et de réduire le coût de production.

## Revendications

1. Câble à fibres optiques constitué d'un tube unique (1) qui délimite une âme intérieure (3) logeant au moins une fibre optique (5) et dont la paroi incorpore une zone de renforcement (7),
**caractérisé en ce que** la zone de renforcement (7) est constituée d'un matériau thermoplastique conférant au câble à la fois résistance à la compression et à l'impact et flexibilité.

2. Câble selon la revendication 1, dans lequel le tube (1) est constitué d'un matériau thermoplastique qui possède un module de flexion supérieur à 850 MPa et la zone de renforcement (7), un module de flexion supérieur à 1000 MPa.

3. Câble selon l'une des revendications 1 ou 2, dans lequel des additifs sont introduits dans le matériau constitutif du tube (1) pur conférer au câble une résistance à la chaleur et au vieillissement.

4. Câble selon l'une des revendications 1 à 3, dans lequel des charges sont introduites dans le matériau constitutif de la zone de renforcement (7) pour conférer au câble une résistance à la compression et à l'impact accrues.

5. Câble selon l'une des revendications 1 à 4, dans lequel la zone de renforcement (7) contient des éléments de renfort (9) s'étendant parallèlement à une génératrice (11) du câble pour conférer au câble une résistance en traction.

6. Câble selon l'une des revendications 1 à 5, dans lequel la zone de renforcement (7) possède une orientation hélicoïdale dans une direction parallèle à une génératrice (11) du câble.

7. Câble selon l'une des revendications 1 à 6, dans lequel la zone de renforcement (7) présente dans un plan de coupe transversal du câble une section annulaire continue et est entourée de deux couches (1A, 1B) du tube (1).

8. Câble selon l'une des revendications 1 à 6, dans lequel la zone de renforcement (7) présente dans un plan de coupe transversal du câble au moins deux secteurs disjoints (72A, 72B, 73A, 73B, 74A, 74B) disposés de part et d'autre de l'âme du câble.

9. Câble selon la revendication 8, dans lequel chaque secteur (72A, 72B) a une forme semi-cylindrique sensiblement annulaire.

10. Câble selon la revendication 8, dans lequel chaque secteur (73A, 73B) a une forme semi-cylindrique sensiblement elliptique.

11. Câble selon la revendication 8, dans lequel chaque secteur (74A, 74B) a une forme semi-cylindrique sensiblement en croissant de lune.
